# EUROPEAN PATENT SPECIFICATION

(11) **EP 0 700 814 B1**
(45) Date of publication and mention of the grant of the patent: **19.01.2000**
(21) Application number: 95112770.3
(22) Date of filing: 14.08.1995
(51) Int. Cl.: B60S 3/04

(54) **Mobile portal frame apparatus and method for washing vehicles**
Portalrahmen und Verfahren zum Waschen von Fahrzeugen
Portique mobile et procédé de lavage pour véhicules

(30) Priority: 07.09.1994 IT MI941830
(43) Date of publication of application: 13.03.1996
(73) Proprietor: CECCATO S.p.A., I-36041 Montecchio Maggiore (Vicenza) (IT)
(72) Inventor: Pillon, Pierangelo, I-36040 Brendola (Vincenza) (IT)
(74) Representative: Rapisardi, Mariacristina

(56) References cited:
- EP-A- 0 309 004
- EP-A- 0 507 757
- WO-A-94/07713
- DE-A- 3 728 430
- DE-A- 4 027 613
- DE-C- 3 633 567
- DE-U- 9 217 939
- DE-U- 9 311 390

## Description

The present invention relates to a mobile portal frame apparatus and method for washing vehicles.

As known, there are currently several types of washing apparatus on the market for washing vehicles, having one or two mobile portal frames.

A first inconvenience of these apparatus is that, according to the request of the client, the dirt may be removed from the vehicle either by a high pressure water jet (less mechanical action on the paint job of the vehicle but also less effective removal of dirt) or by roller brushes (greater mechanical action on the paint job of the vehicle but more effective removal of dirt). In order to satisfy the clients who may opt for either one of the above washing systems, it is therefore necessary to have two distinct washing apparatus with the consequent greater costs.

Furthermore, when a vehicle is washed by means of high pressure nozzles (rotating nozzles), the nozzles provide a conical water jet that when close to the vehicle provides a better removal of dirt while at the same time affects a limited area of the body of the vehicle.

On the other hand, if the nozzle is too far from the vehicle, a greater area of the vehicle body is affected but with a less effective removal of dirt.

It is apparent from the above that it is extremely difficult to optimize the cleaning action of the high pressure nozzles which are generally associated with the mobile portal frame, according to the different shapes of the vehicles.

Furthermore, the fact that the nozzles are associated with the portal frame causes a waste of water, especially when starting and stopping the portal frame, because of the more or less inclined position of the nozzles with respect of the path of the portal frame and of the vehicle position.

DE-U-9311390 teaches a device for washing the wheels of a vehicle which does not have rotating nozzles so that the conical water jet going out from the fixed nozzles affects a limited area of the body of the vehicle. WO-A-9407713 and DE-A-4027613 disclose a rotating nozzles apparatus in which the rotation of the nozzles is not possible through substantially 90° about a plane parallel to the side of the vehicle so that is not possible to wash both the front and tail parts of the vehicle during the motion of the portal frame addressing the water jet also with a perpendicular direction to the front and tail parts of the vehicles as claimed in the characterizing part of claim 1.

The aim of the present invention is to eliminate the inconveniences of the above described conventional washing apparatus having one or more portal frames.

Within this aim, an important object of the invention is to provide a mobile portal frame apparatus and a method for washing vehicles which allow to perform this operation by means of either a high pressure water jet or brushes or both at the same time in order to satisfy the client's requirements.

A further object of the invention is to provide a mobile portal frame apparatus and a method for washing vehicles which, when washing with pressurized water, allows to optimize the consumption of water and the quality of the washing operation.

The above aim, as well as these and other objects that will be more apparent hereinafter, are achieved by a mobile portal frame apparatus, for washing vehicles, comprising at least a first portal frame, brushes for washing the vehicle, nozzles for delivering high pressure water and devices for drying and for supplying substances adapted to wash said vehicle, characterized in that, on at least said first portal frame, it comprises moving means adapted to rotate said nozzles about at least first and second substantially mutually perpendicular planes.

The apparatus according to the present invention performs a method for washing vehicles as claimed in claim 1.

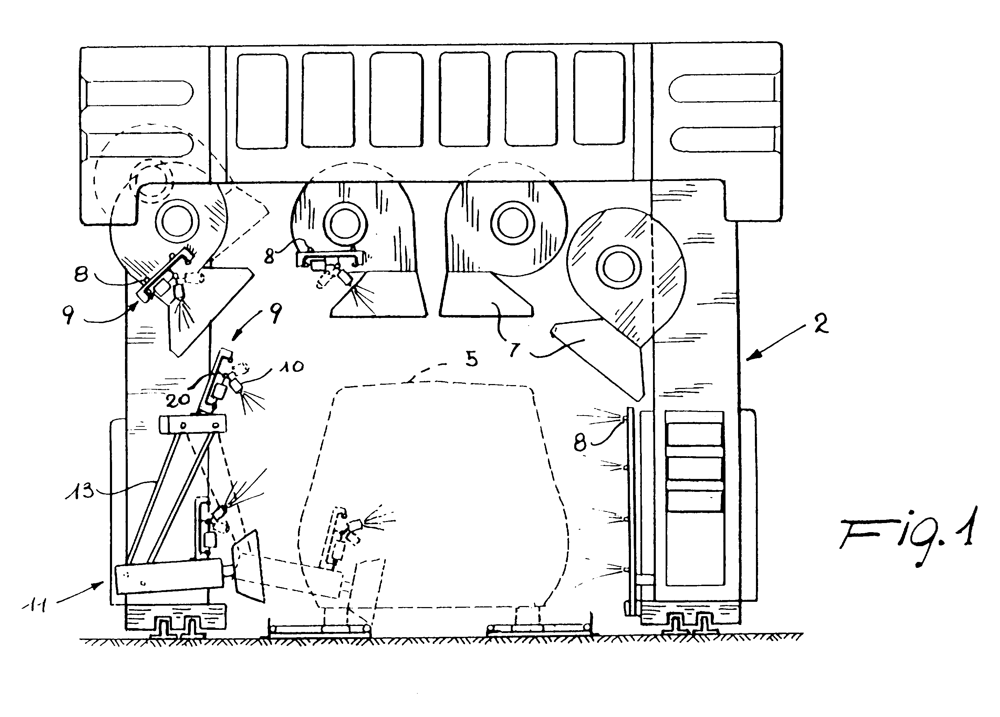

Further characteristics and advantages of the invention will be more apparent by the following description of the mobile portal frame apparatus and of the method for washing vehicles, according to the invention, illustrated, by way of example in the enclosed drawings in which
FIG. 1 is a front schematic view of the portal frame apparatus for washing vehicles according to the invention;

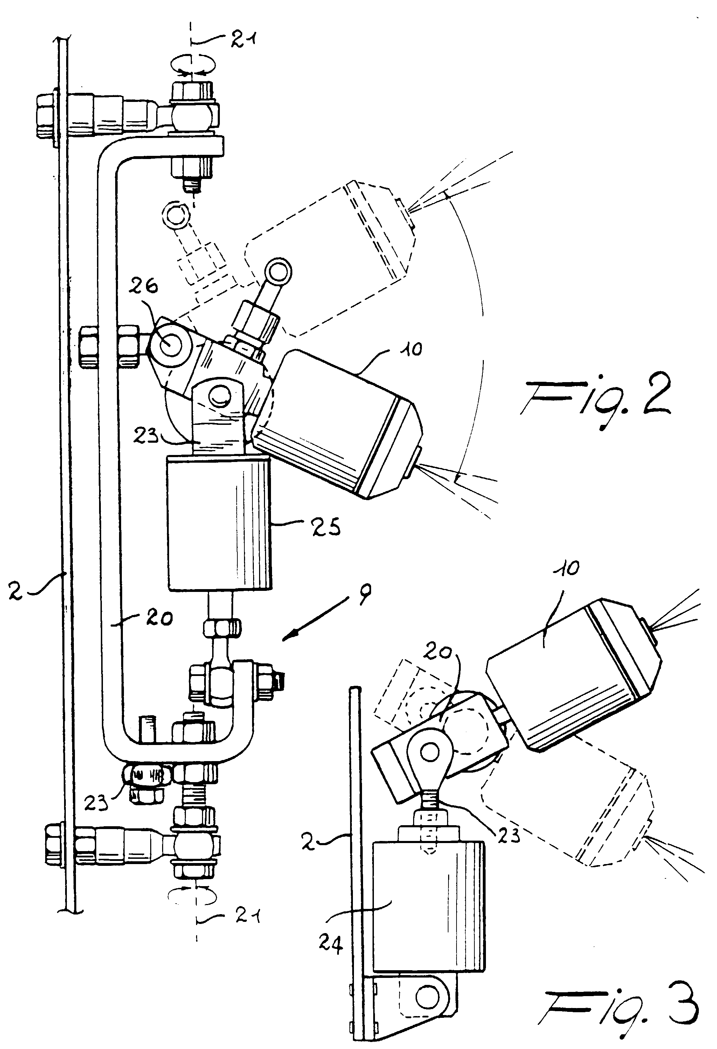

FIG. 2 is a front elevated view of the moving means for rotating the nozzles about at least a first and a second substantially mutually perpendicular planes;
FIG. 3 is a side view of the nozzle moving means;
FIG. 4 is a side view of the apparatus;

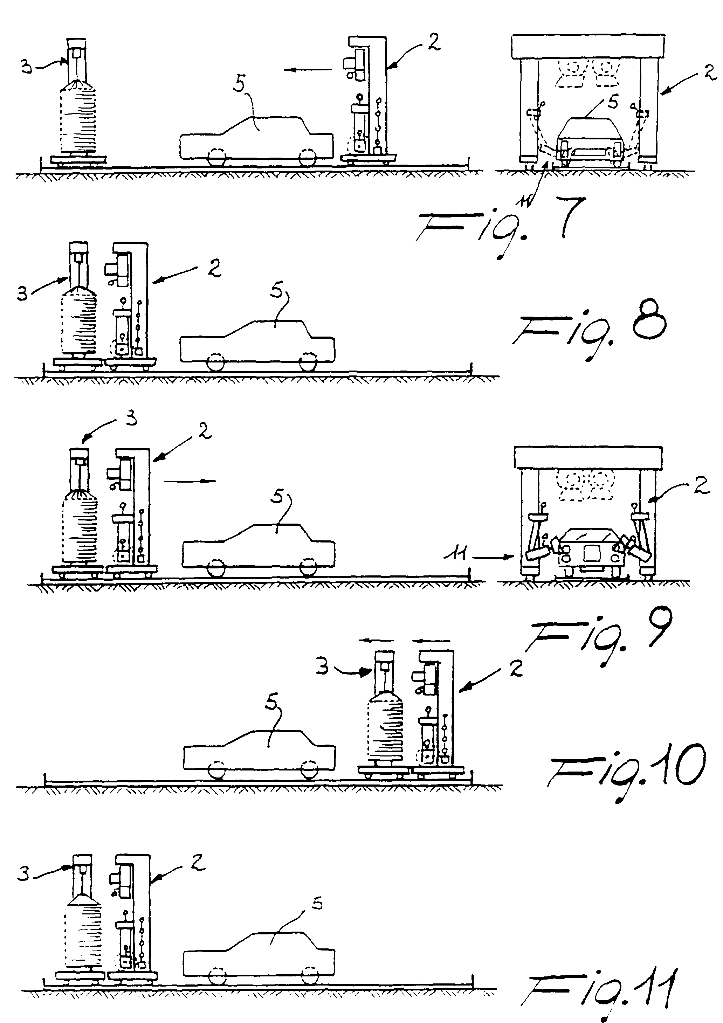

FIGs. 5-11 schematically show the steps of washing a vehicle according to the method of the invention.

With reference to the above figures, the apparatus according to the invention, globally designated by the reference numeral 1, includes: a first portal frame and a second portal frame, respectively designated by the numerals 2 and 3, supporting brushes 4 for washing a vehicle 5; high pressure water nozzles 10 (rotating nozzles), drying devices 7 and supplying devices 8 for supplying substances for washing the vehicle.

Advantageously, moving means 9 are provided at least on the first portal frame 2 adapted to rotate rotating nozzles 10 about at least first and second substantially perpendicular planes.

The portal frame 2 is also provided with a device 11 for washing the wheels 12 of the vehicle. The device 11 also supports high pressure nozzles 10 and moving means 9 adapted to rotate such nozzles.

Namely, the wheel washing device 11 is associated with the first portal frame by, for example, an articulated parallelogram 13 or by a slide, adapted to move the nozzles 10 and their moving means 9 both in front or at the back of the vehicle during washing in order to reach and clean the front and tail parts of the vehicle also in gaps which would be difficult to reach with the brushes.

In this manner, as said above, the displacement of the wheel washing device 11, by means of the articulated parallelogram or slide, allows to bring the high pressure nozzles 10 and their moving means to a front or back region of the vehicle by using a pre-existing device.

As easily understood, the nozzle jet can be aimed under the front or rear parts of the vehicle body, or at the sides, in order to remove dirt from regions which are difficult to reach with conventional apparatus; those are regions known to be the starting point of corrosion of the body work.

Each rotating nozzle ejects a water jet in a space forming a substantially conical surface and the water jet hits the vehicle on a substantially circular pattern.

The motion along two mutually perpendicular planes thereby allows to move the circular pattern ejected by the high pressure nozzle to the right and left and up and down in order to hit a wide area of the vehicle with an effective water jet for an optimal washing of the vehicle.

The moving means are adapted to rotate the nozzles through 90° along one first motion plane when the first portal frame has reached the half of the vehicle during either the forward or backward motion of the portal frame.

On the contrary, the moving means are adapted to rotate the nozzles through 90° along both the first and second planes during the front and tail washing of the vehicle.

Namely, the moving means 9 comprise a C-shaped support member 20 adapted to rotate about a pivoting axis 21 with two supports 22 associated with the portal frame 2.

The rotation of the support member 20 about the axis 21 is obtained by the displacement of a rod 23 of an hydraulic piston 24 associated with the portal frame 2.

The support member 20 supports a second hydraulic piston 25 having a rod 23 adapted to rotate the nozzles 10 about a rotation axis 26.

It is apparent that by combining the motions of the first and second hydraulic pistons 24 and 25, the movements of the nozzles 10 are coordinated in any possible way for achieving the optimal washing of a wide surface of the vehicle body.

Furthermore, the drying means 7 on the portal frame 2 are constituted by two air distributors which support the high pressure nozzles 10 ad the moving means 9 of the nozzles 10, defined by two hydraulic pistons 24 and 25.

The two air distributors 7 also have atomizers 8 of a detergent liquid for washing the vehicle.

Brushes 4, for the mechanical cleaning of the vehicle, are rotatably associated with the second portal frame together with the distribution members 38 for auxiliary cleaning fluids, such as wax or similar, adapted to facilitate the subsequent drying of the vehicle.

The apparatus according to the invention operates according to a series of method steps which are also the subject of the present invention.

In particular, the method for washing vehicles, according to the invention, consists of bringing the high pressure nozzles 10 in front of the front, tail and bottom portion of the vehicle during an initial phase of the forward or backward motion of the portal frame. Simultaneously to this motion, the nozzles 10 are rotated about at least a first and second mutually substantially perpendicular planes in order to remove dirt from the bottom of the vehicle's body and from all the gaps which are difficult to reach by means of brushes.

In particular, the method consists of positioning a vehicle 5 in a selected region of the apparatus.

Then the first portal frame 2 makes a first forward pass along the vehicle for spraying the detergent substances on the vehicle by means of the nozzles 8.

Then, after a preset time determined by the acting time of the detergents on the vehicle's body, there is a first removal operation of the dirt from the vehicle according to the following steps.

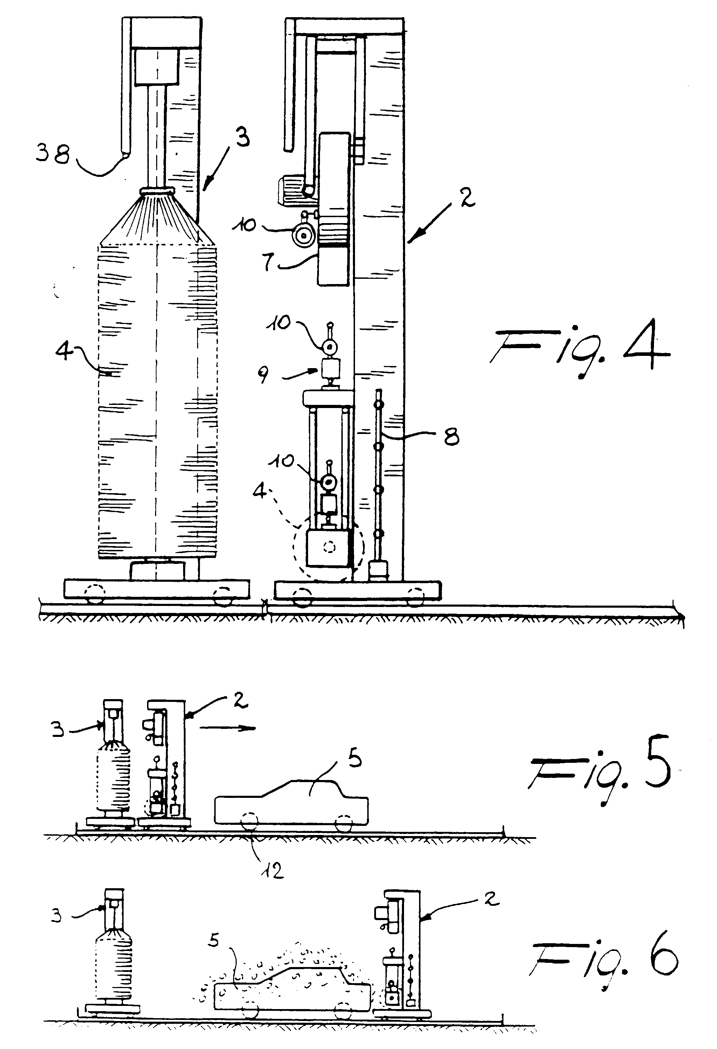

The portal frame 2, as shown in figure 4, is placed at the tail end of the vehicle 5.

The portal frame 2 starts the second return stroke and stops at a preset distance from the tail end of the vehicle and the high pressure nozzles 10 are brought in front of the tail end and of the bottom of the vehicle 5, one or more times, and are rotated about two mutually perpendicular planes.

After one or more movements of the nozzles in order to hit the tail region of the vehicle with a high pressure jet, the first portal frame 2 starts the return stroke maintaining the high pressure nozzles activated and fixed about the first motion plane but free to rotate about the second plane.

About at the middle of the vehicle, the nozzles rotate through substantially 90° about the first plane in order to be at an angle which is equal but opposite to the previous angle, with respect to the body of the vehicle.

After this movement, the nozzles continue to rotate about the second plane until the portal frame 2 overcomes the vehicle of a preset distance.

At this point the high pressure nozzles are brought in front of the front and bottom regions of the vehicle.

During this movement, the nozzles continue to rotate about their mutually perpendicular planes. Also during this step there may be more than one washing operations of the front end of the vehicle.

Then the portal frame 2 performs a third forward stroke sequentially repeating all the steps of the second return stroke.

During the third forward movement of the first portal frame 2, the second portal frame 3 performs a fourth forward stroke for distributing auxiliary substances, such as wax, on the vehicle.

At the end of the described washing cycle, which is only a non limitative example of washing cycle, the second portal frame 3 returns to its initial position, with a fifth return stroke, optionally distributing further substances on the vehicle or just with a idle stroke.

The first portal frame 2 follows the second portal frame 3 at a preset distance and brings the air distributors above the vehicle in order to dry the vehicle with a sixth return stroke.

During the first forward stroke of the first portal frame or, according to the requirements, during another stroke, it is possible to operate the wheel washing means for cleaning the wheels.

The operation of the apparatus according to the invention is apparent from what has been described and illustrated.

It has been seen in practice that the apparatus and method for washing vehicles, according to the invention, are particularly advantageous for an optimization of the use of water with a consequent saving of the same.

Also the cleaning of the vehicle is optimal because the vehicle is washed by means of pressurized water and at the same time by mechanical removal of dirt by means of the brushes. The possibility of bringing the high pressure nozzles in the bottom-tail region, the bottom-front region and the bottom-side region of the vehicle allows to clean also the most remote parts of the vehicle where dirt hides starting the corrosion process of the body work.

It is also mention the fact that by using two portal frames, one provided mainly with brushes, the other one provided mainly with high pressure nozzles, allows to wash the vehicle in any possible way, according to the client's requirements.

The materials employed, as well as the dimensions, may be any according to the specific needs and the state of the art.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Mobile portal frame apparatus, for washing vehicles, comprising at least a first portal frame (2), brushes (4) for washing the vehicle, nozzles (10) for delivering high pressure water and devices for drying (7) and for supplying (8) substances adapted to wash said vehicle, moving means (9), on at least said first portal frame, adapted to rotate said nozzles (10) about at least first and second substantially mutually perpendicular planes and a device (11) for washing the wheels (12) of said vehicle supporting said high pressure nozzles, characterized in that said device for washing the wheels is associated with said first portal frame by means of an articulated parallelogramm (13) and supports said moving means (9) for rotating said nozzles through substantially 90° about said first plane, parallel to the side of said vehicle, in a selected region at about the middle of said vehicle for washing the front and tail parts of the vehicle during the motion of said first portal frame.

2. Apparatus, according to one or more of the preceding claims, characterized in that said drying means comprises at least two air distributors (7) supporting said high pressure nozzles (10) and said moving means (9) for rotating said nozzles.

3. Apparatus, according to one or more of the preceding claims, characterized in that said moving means comprises a support member (20) adapted to rotate about a pivoting axis (21) with said first portal frame, said nozzles (10) being pivoted to said support member (20).

4. Apparatus, according to one or more of the preceding claims, characterized in that said support member and said nozzles are rotated respectively by means of a first hydraulic piston (24), associated with said portal frame, and by a second hydraulic piston (25), supported by said support member, said first and second pistons having their rods (23) arranged substantially at 90°.

5. Apparatus, according to one or more of the preceding claims, characterized in that it comprises a second portal frame (3) supporting said brushes, for the mechanical washing of said vehicle, and distributing members (38) of auxiliary substances on said vehicle.

6. Apparatus, according to one or more of the preceding claims, characterized in that said air distributors support sprinklers (8) of a detergent fluid on said vehicle.

7. Method, for washing vehicles, by means of a mobile portal frame apparatus, characterized in that it comprises: positioning a vehicle in a selected region of the apparatus; performing a first forward stroke with a first portal frame along said vehicle for distribuiting detergent substances on said vehicle; after a preset time, performing a first removing operation of dirt from said vehicle performing at least one motion, by means of an articulated parallelogramm moving the device for washing the wheels, of the high pressure water delivery nozzles at the bottom tail region of said vehicle; during said motion, rotating said nozzles about a first and a second substatially mutually perpendicular planes; performing a second return stroke of said first portal frame maintaining said high pressure nozzles activated and fixed about the first motion plane but free to rotate about the second plane; rotating said nozzles through substantially 90° about said first plane parallel to the side of said vehicle in a preset region at the middle portion of said vehicle; performing at least one motion, by means of said articulated parallelogramm moving the device for washing the wheels, of said nozzles at the bottom front region of the vehicle; during said motion, rotating said nozzles about a first and a second substantially perpendicular plane.

8. Method, according to one or more of the preceding claims, characterized in that it comprises: after said second return stroke, a second removal operation of said dirt from said vehicle performing at least a motion of said nozzles at the bottom front region of said vehicle; during said motion, rotating said nozzles about a first and a second substantially perpendicular planes; performing a third forward stroke of said first portal frame maintaining said high pressure nozzles activated, performing at least one motion of said nozzles at the bottom tail region of the vehicle; during said motion, rotating said nozzles about a first and a second substantially perpendicular planes.

9. Method, according to one or more of the preceding claims, characterized in that it comprises: contemporaneously to said third forward stroke of said first portal frame a fourth forward stroke of a second portal frame for distributing auxiliary substances on said vehicle and performing a fifth return stroke of said second portal frame followed by a sixth stroke of said first portal frame for drying said vehicle.

10. Method, according to one or more of the preceding claims, characterized in that said nozzles are continuously rotate about said second plane during the motion of said first portal frame.

11. Method, according to one or more of the preceding claims, characterized in that said wheels are washed during the motion of said first portal frame.

## Patentansprüche

1. Mobile Portalrahmen-Anlage zum Waschen von Fahrzeugen, welche aufweist: mindestens einen ersten Portalrahmen (2); Bürsten (4) zum Waschen des Fahrzeugs; Düsen (10) zum Zuführen von Hochdruckwasser; und Vorrichtungen zum Trocknen (7) und zum Zuführen (8) von Substanzen, die für das waschen des Fahrzeugs ausgelegt sind; Bewegungsmittel (9) auf mindestens dem ersten Portalrahmen, die ausgelegt sind, um die Düsen (10) um mindestens eine erste und eine zweite Ebene, die im wesentlichen zueinander senkrecht sind, zu drehen; und eine Vorrichtung (11) zum Waschen der Räder (12) des Fahrzeugs, die die Hochdruckdüsen tragen, dadurch gekennzeichnet, daß die Vorrichtung zum Waschen der Räder mittels eines Gelenk-Parallelogramms (13) dem ersten Portalrahmen zugeordnet ist und die Bewegungsmittel (9) trägt, um die Düsen um im wesentlichen 90° um die erste Ebene parallel zur Seite des Fahrzeugs in einem ausgewählten Bereich ungefähr in der Mitte des Fahrzeugs zu drehen, um den Vorder- und Hinterteil des Fahrzeugs während der Bewegung des ersten Portalrahmens zu waschen.

2. Anlage nach einem oder mehreren der vorhergehenden Ansprüche, dadurch gekennzeichnet, daß das Trocknungsmittel mindestens zwei Luftverteiler (7) zum Halten der Hochdruckdüsen (10) und das Bewegungsmittel (9) zum Drehen der Düsen aufweist.

3. Anlage nach einem oder mehreren der vorhergehenden Ansprüche, dadurch gekennzeichnet, daß das Bewegungsmittel ein Stützglied (20) aufweist, das zur Drehung um eine Schwenkachse (21) mit dem ersten Portalrahmen ausgelegt ist, wobei die Düsen (10) um das Stützglied (20) gedreht werden.

4. Anlage nach einem oder mehreren der vorhergehenden Ansprüche, dadurch gekennzeichnet, daß das Stützglied und die Düsen jeweils mittels eines ersten, dem Portalrahmen zugeordneten Hydraulikkolbens (24) und eines zweiten durch das Stützglied getragenen Hydraulikkolbens (25) gedreht werden, wobei bei dem ersten und dem zweiten Kolben die Stangen (23) im wesentlichen unter 90° angeordnet sind.

5. Anlage nach einem oder mehreren der vorhergehenden Ansprüche, dadurch gekennzeichnet, daß sie einen die Bürsten tragenden zweiten Portalrahmen (3) für das mechanische Waschen des Fahrzeugs sowie Verteilungsglieder (38) für Hilfssubstanzen an dem Fahrzeug aufweist.

6. Anlage nach einem oder mehreren der vorhergehenden Ansprüche, dadurch gekennzeichnet, daß die Luftverteiler Sprinkler (8) für ein Detergentienfluid auf dem Fahrzeug tragen.

7. Verfahren zum Waschen von Fahrzeugen mittels einer mobilen Portalrahmen-Anlage, dadurch gekennzeichnet, daß es die folgenden Schritte aufweist: Positionieren eines Fahrzeugs in einem ausgewählten Bereich der Anlage; Durchführen eines ersten Vorwärtshubs mit einem ersten Portalrahmen entlang des Fahrzeugs zum Verteilen von Detergentien-Substanzen auf dem Fahrzeug; nach einer voreingestellten Zeit Durchführen eines ersten Entfernungsvorgangs für Schmutz von dem Fahrzeug, wobei mittels eines Gelenk-Parallelogramms, welches die Vorrichtung zum Waschen der Räder bewegt, mindestens eine Bewegung der Hochdruckwasser-Zufuhrdüsen am unteren hinteren Bereich des Fahrzeugs durchgeführt wird; während der Bewegung Drehen dor Düsen um eine erste und eine zweite Ebene, die zueinander im wesentlichen senkrecht sind; Durchführen eines zweiten Rückkehrhubs des ersten Portalrahmens, wobei die Hochdruckdüsen aktiviert und um die erste Bewegungsebene fixiert gehalten bleiben, sich jedoch um die zweite Ebene frei drehen können; Drehen der Düsen um im wesentlichen 90° um die erste Ebene parallel zur Seite des Fahrzeugs in einem voreingestellten Bereich im mittleren Abschnitt des Fahrzeugs; mittels des Gelenk-Parallelogramms, welches die Vorrichtung zum Waschen der Räder bewegt, Durchführen mindestens einer Bewegung der Düsen am unteren vorderen Bereich des Fahrzeugs; während der Bewegung Drehen der Düsen um eine erste und eine zweite Ebene, die zueinander im wesentlichen senkrecht sind.

8. Verfahren nach einem oder mehreren der vorhergehenden Ansprüche, dadurch gekennzeichnet, daß es die folgenden Schritte aufweist: nach dem zweiten Rückkehrhub Durchführen eines zweiten Entfernungsvorgangs von Schmutz von dem Fahrzeug, indem mindesten eine Bewegung der Düsen an dem unteren vorderen Bereich des Fahrzeugs durchgeführt wird; während der Bewegung Drehen der Düsen um eine erste und eine zweite Ebene, die im wesentlichen zueinander senkrecht sind; Durchführen eines dritten Vorwärtshubs des ersten Portalrahmens, wobei die Hochdruckdüsen aktiviert bleiben, wobei mindestens eine Bewegung der Düsen am unteren Endbereich der einen Bewegung der Düsen am unteren Endbereich der ersten und der zweiten Ebene, die im wesentlichen zueinander senkrecht sind, durchgeführt wird.

9. Verfahren nach einem oder mehreren der vorhergehenden Ansprüche, dadurch gekennzeichnet, daß es die folgenden Schritte aufweist: gleichzeitig zu dem ersten Vorwärtshub des ersten Portalrahmens Durchführen eines vierten Vorwärtshubs eines zweiten Portalrahmens zum Verteilen von Hilfssubstanzen auf dem Fahrzeug; und Durchführen eines fünften Rückkehrhubs des zweiten Portalrahmens mit einem anschließenden sechsten Hub des ersten Portal rahmens zum Trocknen des Fahrzeugs.

10. Verfahren nach einem oder mehreren der vorhergehenden Ansprüche, dadurch gekennzeichnet, daß die Düsen während der Bewegung des ersten Portalrahmens kontinuierlich um die zweite Ebene gedreht werden.

11. Verfahren nach einem oder mehreren der vorhergehenden Ansprüche, dadurch gekennzeichnet, daß die Räder während der Bewegung des ersten Portalrahmens gewaschen werden.

## Revendications

1. Dispositif de châssis de portique mobile pour laver des véhicules, comprenant au moins un premier châssis de portique (2), des brosses (4) pour laver le véhicule, des buses (10) pour projeter de l'eau haute pression, des dispositifs de séchage (7) et de fourniture (8) de substances destinées à laver le véhicule, des moyens de déplacement (9) sur au moins le premier châssis de portique, pour faire tourner les buses (10) autour d'au moins un premier plan et un second plan essentiellement perpendiculaires l'un à l'autre, et un dispositif (il) pour laver les roues (12) du véhicule, supportant des buses haute pression,
caractérisé en ce que
le dispositif pour laver les roues est associé au premier châssis de portique au moyen d'un parallélogramme articulé (13) et supporte des moyens mobiles (9) pour faire tourner les buses d'essentiellement 90° par rapport au premier plan, parallèle au côté du véhicule, dans une zone sélectionnée à peu près au milieu du véhicule, de manière à laver les parties avant et arrière du véhicule pendant le mouvement du premier châssis de portique.

2. Dispositif selon la revendication 1,
caractérisé en ce que
les moyens de séchage comprennent au moins deux distributeurs d'air (7) supportant des buses haute pression (10) et des moyens de déplacement (9) pour faire tourner les buses.

3. Dispositif selon l'une ou les deux revendications précédentes,
caractérisé en ce que
les moyens de déplacement comprennent un élément de support (20) destiné à tourner autour d'un axe de pivotement (21) avec le premier châssis de portique, les buses (10) étant entraînées en pivotement par rapport à cet élément de support (20).

4. Dispositif selon l'une ou plusieurs des revendications précédentes,
caractérisé en ce que
l'élément de support et les buses sont entraînées respectivement en pivotement au moyen d'un premier piston hydraulique (24) associé au châssis de portique, et par un second piston hydraulique (25) supporté par l'élément de support, les premier et second pistons ayant leurs tiges de piston (23) disposés essentiellement à 90°.

5. Dispositif selon l'une ou plusieurs des revendications précédentes,
caractérisé en ce qu'
il comprend un second châssis de portique (3) supportant les brosses, pour le lavage mécanique du véhicule, et des éléments de distribution (38) de substances auxiliaires sur le véhicule.

6. Dispositif selon l'une ou plusieurs des revendications précédentes,
caractérisé en ce que
les distributeurs d'air supportent des arroseurs (8) d'un fluide détergent sur le véhicule.

7. Procédé pour laver des véhicules au moyen d'un dispositif de châssis de portique mobile,
caractérisé en ce qu'
il comprend les étapes consistant à :
- positionner un véhicule dans une zone sélectionnée du dispositif ;
- effectuer une première course vers l'avant avec un premier châssis de portique le long du véhicule, pour distribuer des substances détergentes sur le véhicule ;
- effectuer, au bout d'une temps prédéterminé, une première opération d'enlèvement de la saleté du véhicule en effectuant, au moyen d'un parallélogramme articulé déplaçant le dispositif pour laver les roues, au moins un mouvement des buses de distribution d'eau haute pression dans la zone arrière inférieure du véhicule ;
- faire tourner les buses, pendant ce mouvement, autour d'un premier plan et d'un second plan essentiellement perpendiculaires l'un à l'autre ;
- effectuer une seconde course de retour du premier châssis de portique en maintenant les buses haute pression activées et fixées autour du premier plan de mouvement, mais libres de tourner autour du second plan ;
- faire tourner les buses d'essentiellement 90° autour du premier plan parallèle au côté du véhicule dans une zone prédéterminée de la partie médiane du véhicule ;
- effectuer, au moyen du parallélogramme articulé déplaçant le dispositif pour laver les roues, au moins un mouvement des buses dans la zone avant inférieure du véhicule ; et
- faire tourner les buses, pendant ce mouvement, autour d'un premier plan et d'un second plan essentiellement perpendiculaires l'un à l'autre.

8. Procédé selon la revendication précédente,
caractérisé en ce qu'
il comprend les étapes consistant à :
- effectuer, après la seconde course de retour, une seconde opération d'enlèvement de la saleté du véhicule en effectuant au moins un mouvement des buses dans la zone avant inférieure du véhicule ;
- faire tourner les buses, pendant ce mouvement, autour d'un premier plan et d'un second plan essentiellement perpendiculaires l'un à l'autre ;
- effectuer une troisième course vers l'avant du premier châssis de portique en maintenant les buses haute pression activées, en effectuant au moins un mouvement des buses dans la zone arrière inférieure du véhicule ; et
- faire tourner les buses, pendant ce mouvement, autour d'un premier plan et d'un second plan essentiellement perpendiculaires l'un à l'autre.

9. Procédé selon l'une ou l'autre des deux revendications précédentes,
caractérisé en ce qu'
il comprend les étapes consistant à :
- effectuer, au même moment que la troisième course vers l'avant du premier châssis de portique, une quatrième course vers l'avant d'un second châssis de portique pour distribuer des substances auxiliaires sur le véhicule ; et
- effectuer une cinquième course de retour du premier châssis de portique pour sécher le véhicule.

10. Procédé selon l'une ou plusieurs des revendications précédentes,
caractérisé en ce que
les buses sont entraînées en rotation continue autour du second plan pendant le mouvement du premier châssis de portique.

11. Procédé selon l'une ou plusieurs des revendications précédentes,
caractérisé en ce que
les roues sont lavées pendant le mouvement du premier châssis de portique.
